# EUROPEAN PATENT SPECIFICATION

(11) **EP 2 767 709 B1**
(45) Date of publication and mention of the grant of the patent: **26.04.2017**
(21) Application number: 13155196.2
(22) Date of filing: 14.02.2013
(51) Int. Cl.: F03D 7/02, F03D 7/04

(54) **Wind turbine control method and system**
Verfahren und System zur Windturbinensteuerung
Procédés de contrôle d'éolienne et systèmes

(43) Date of publication of application: 20.08.2014
(73) Proprietor: Siemens Aktiengesellschaft, 80333 München (DE)
(72) Inventor: Esbensen, Thomas, 7400 Herning (DK); Hoegh, Gustav, 7400 Herning (DK)

(56) References cited:
- WO-A1-2012/019613
- US-A1- 2008 136 188
- US-A1- 2011 142 620

## Description

### Field of Invention

The present invention relates to the field of controlling the operation of wind turbines, in particular to the field of controlling wind turbines such that a smooth transition between partial load and full load can be achieved.

### Art Background

A wind turbine controller has several objectives; it must maximize power production, reduce and limit structural and electrical loads, and also reduce and limit acoustic noise emissions. Typically, the wind turbine controller comprises multiple controllers that are used to achieve the control objectives by individually controlling actuators for yaw direction, generator power (or torque), and blade pitch angles.

As explained in the following, the wind turbine controller operates in different control regions. Optimal power production of wind turbines at below rated power depends on the ability to apply an optimal pitch angle (the pitch angle is the angle between the blade chord line and the rotor plane of rotation) and track the optimal rotor tip-speed ratio (the ratio of rotor shaft speed to effective wind speed) at below rated rotational speed. The controller may accomplish this by setting a predetermined pitch angle and a generator (or converter) reference power (or torque) to balance the rotor aerodynamic torque.

Below rated speed (in the so-called variable-speed region) the pitch angle is normally fixed, or varied a few degrees as function of the operating point. The power (or torque) reference is set as function of the rotational speed (or wind speed).

Typically to reduce noise and loads, the rotational speed is limited and the turbine enters the so-called constant-speed region for higher wind speeds. Here, the pitch angle may change as function of the power, torque or wind speed, while the power (or torque) reference is adjusted in order to maintain the desired rotational speed.

To reduce structural and electrical loads, the turbine enters the so-called constant-power region for even higher wind speeds. At rated power the power (or torque) is fixed, while the pitch angle is adjusted to maintain the rated rotational speed.

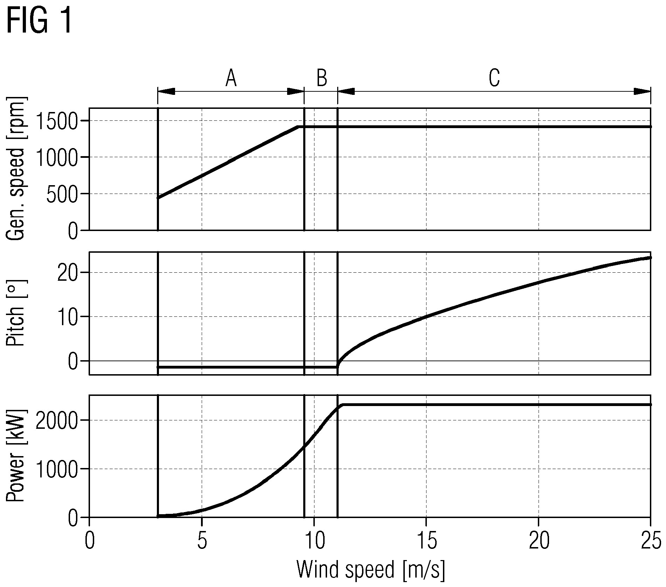

To improve understanding, Figure 1 illustrates the different control regions A, B, C for an exemplary wind turbine with a nominal generator speed of 1450 rpm and a nominal power of 2.3 MW. The control regions A, B, C are separated by the vertical lines in Figure 1. More specifically, the control region A is the variable-speed region, the control region B is the constant-speed region, and the control region C is the constant-power region.

In the constant-speed region (B in Figure 1), a "standard" wind turbine controller controls the power (or torque) based on the speed error (the corresponding controller is denoted a speed-power controller). In the constant-power region (C in Figure 1) where full power (and torque) is achieved, the controller controls the rotational speed using the pitch system (the corresponding controller is denoted a speed-pitch controller). However, when using multiple controllers, a smooth transition between the two controllers (i.e. between the partial load and full load regions) has to be ensured. If a switch between two controllers is undertaken without bumpless transfer, a bump in the control signal may cause severe loading and may even trigger oscillations between the two controllers, making the system unstable.

A known control method and control system is disclosed in US 2008/0136188 A1.

A known attempt at solving the problem of making a smooth transition between the partial load region and the full load region is to switch between the two controllers (i.e. between the speed-power controller and the speed-pitch controller), where the time of switching depends on a comparison of some operating variables and some threshold values. However, this approach has a number of disadvantages.

A first disadvantage is that the switch between the two controllers may happen a little late. For increasing wind speeds (partial load to full load transition) this may cause a small over-speed and the turbine has to pitch quite aggressively to control the speed in the transition zone. This may introduce increased tower and blade loads because the rapid pitch changes cause large changes in thrust. For decreasing wind speeds (full load to partial load transition), the late switching results in that the rated power may be maintained too long, which will take more energy out of the rotor than is being input by the wind. This will slow the rotor down quite a bit and bring it away from the optimal operating point, thus being negative to loads and energy production.

A second disadvantage is that one controller is active at a time and it is a rather complex task to (suddenly) enable an inactive controller without introducing bumps in the control signals.

A third disadvantage is that switching between the two controllers may introduce instabilities in the system if it enters a limit cycle (switching back and forth). The controller may also be caught briefly in the 'wrong' mode.

Accordingly, there is a need for an improved way of controlling a wind turbine, which does not have the above mentioned disadvantages.

### Summary of the Invention

This need may be met by the subject matter according to the independent claims. Advantageous embodiments of the present invention are described by the dependent claims.

According to a first aspect of the invention there is provided a method of controlling operation of a power controller and a pitch controller in a wind turbine, the method being defined in claim 1.

This aspect of the invention is based on the idea that by continuously adjusting (increasing or decreasing) the power controller speed reference value in dependency on respective pitch conditions and adjusting the pitch controller speed reference value in dependency on respective power conditions, both the power controller and the pitch controller can be active simultaneously, without undesired interference between those controllers, and switching between them can thereby be avoided. In other words, the reference value for the power controller is manipulated in dependency on the first and second pitch conditions and the reference value for the pitch controller is manipulated in dependency on the first and second power conditions in such a way that the influence of the respective controllers is controlled.

In the present context, the term "power controller" may in particular denote a speed-power controller as referred to in the introduction above. That is, the power controller may in particular be a controller which outputs a power reference value (i.e. the power or torque value which is to be applied by the wind turbine) in response to a power controller speed reference value. It is noted that the terms "power" and "torque" are used interchangeably in the art when referring to the output or control signal for the output of a wind turbine. The present disclosure mainly uses the term "power", but references to "torque" may also be made.

In the present context, the term "pitch controller" may in particular denote a speed-pitch controller as referred to in the introduction above. That is, the pitch controller may in particular be a controller which outputs a pitch reference value (i.e. the value of the pitch angle for the blades of the wind turbine) in response to a pitch controller speed reference value.

In the present context, the term "pitch value" may in particular denote a current or actual value of the pitch angle for the wind turbine during operation.

The pitch value is preferably obtained as a signal from the mechanism that mechanically adjusts the pitch angle of the rotor blades.

The operations of increasing and decreasing the power controller speed reference value are preferably performed by respectively adding the first incremental value to or subtracting the first decremental value from the current power controller speed reference value.

In the present context, the term "power value" may in particular denote a current or actual value of the power produced by the wind turbine during operation. In other words, the "power value" may be the power output by the generator, converter or transformer of the wind turbine.

The power value is preferably obtained as a signal from the mechanism that mechanically adjusts the power generated by the wind turbine.

The operations of decreasing and increasing the pitch controller speed reference value are preferably performed by respectively subtracting the second incremental value from or adding the second incremental value to the current pitch controller speed reference value.

The method according to this aspect may preferably be performed repetitively with a predetermined frequency, e.g. once every 0.1 seconds, 0.5 seconds, 1 second or 2 seconds.

The steps of the method do not necessarily have to be performed in the specific order indicated above. For example, the first three steps (i.e. steps (a) to (c)) may be performed in parallel with the three last steps (i.e. steps (d) to (f)). Furthermore, in one repetition of the method steps, the step (c) may only be performed if it is determined in step (b) that the first pitch condition is not fulfilled. Similarly, in one repetition of the method steps, the step (f) may only be performed if it is determined in step (d) that the first power condition is not fulfilled.

According to an embodiment of the invention, the first pitch condition is fulfilled when the difference between the pitch value and a predetermined pitch value is below a first threshold value, and the second pitch condition is fulfilled when the difference between the pitch value and the predetermined pitch value is above a second threshold value.

In the present embodiment, the predetermined pitch value may preferably denote the optimum pitch angle for the wind turbine, i.e. the pitch angle where the rotor blades extract the most energy from the incoming wind.

In this embodiment, the first pitch condition is fulfilled when it is determined that the current pitch value is within a certain distance or range (i.e. the first threshold value) of the optimum pitch angle of the wind turbine. In other words, the first pitch condition is fulfilled in a case where a transition from full load to partial load, i.e. a transition from the constant-power region to the constant-speed region, may be approaching. By increasing the power controller speed reference value by a first incremental value in this case, the power controller is prepared to the approaching transition in advance.

On the other hand, the second pitch condition is fulfilled when it is determined that the current pitch value deviates from the optimum pitch angle by a certain amount, i.e. the second threshold value. In other words, the second pitch condition is fulfilled in a case where it is likely that a transition from partial load (constant-speed region) to full load (constant-power region) has taken place. By decreasing the power controller speed reference value by a first decremental value in this case, it can be ensured that the power controller outputs a large (or maximum) power reference value in a stable manner.

According to a further embodiment of the invention, the step of determining whether a first pitch condition is fulfilled comprises calculating a pitch time estimate, the pitch time estimate being indicative of the (expected) time remaining until the pitch reaches the predetermined pitch value, and wherein the first pitch condition is fulfilled when the pitch time estimate is below a third threshold value.

The pitch time estimate is preferably calculated based on a series of successive pitch values, e.g. by estimating the slope of the pitch values as a function of time.

In this embodiment, the first pitch condition is fulfilled if it is determined that the calculated estimate of the remaining time until the pitch reaches the optimum pitch value is below the third threshold value. In other words, the first pitch condition is fulfilled in this embodiment in a case where it is estimated that a transition from full load to partial load will take place within a certain amount of time (third threshold value). Thus, like in the previous embodiment, the first pitch condition is fulfilled in a case where it may be expected that a transition from full load to partial load is approaching, and again the power controller is prepared to the approaching transition in advance by increasing the power controller speed reference value by a first incremental value.

According to a further embodiment of the invention, the first power condition is fulfilled when the power value is above a fourth threshold value, and the second power condition is fulfilled when the power value is below a fifth threshold value.

Both the fourth threshold value and the fifth threshold value are smaller than the maximum (or nominal) power of the wind turbine, i.e. the power generated by the wind turbine at full load (or in the constant-power region).

Accordingly, in this embodiment, the first power condition is fulfilled when it is determined that the current power value is within a certain distance or range of the maximum power of the wind turbine. In other words, the first power condition is fulfilled in a case where a transition from partial load to full load, i.e. a transition from the constant-speed region to the constant-power region, may be approaching. By decreasing the pitch controller speed reference value by a second decremental value in this case, the pitch controller is prepared to the approaching transition in advance.

On the other hand, the second power condition is fulfilled when it is determined that the current power value deviates from the maximum power by a certain amount. In other words, the second pitch condition is fulfilled in a case where it is likely that a transition from full load (constant-power region) to partial load (constant-speed region) has taken place. By increasing the power controller speed reference value by a second incremental value in this case, it can be ensured that the pitch controller outputs a small (or minimum) pitch reference value such that the pitch angle of the rotor blades is maintained at (or close to) the optimum pitch angle in a stable manner.

According to a further embodiment of the invention, the step of determining whether a first power condition is fulfilled comprises calculating a power time estimate, the power time estimate being indicative of the (expected) time remaining until the power reaches a predetermined power value, and wherein the first power condition is fulfilled when the power time estimate is below a sixth threshold value.

The power time estimate is preferably calculated based on a series of successive power values, e.g. by estimating the slope of the power values as a function of time.

In this embodiment, the first power condition is fulfilled if it is determined that the calculated estimate of the remaining time until the power reaches a predetermined power value, e.g. the maximum or nominal power of the wind turbine. In other words, the first power condition is fulfilled in this embodiment in a case where it is estimated that a transition from partial load to full load will take place within a certain amount of time (sixth threshold value). Thus, like in the previous embodiment, the first power condition is fulfilled in a case where it may be expected that a transition from partial load to full load is approaching, and again the pitch controller is prepared to the approaching transition in advance by decreasing the pitch controller speed reference value by a second decremental value.

According to a further embodiment of the invention, the method further comprises counting the time since the power controller speed reference value was last increased, and the power controller speed reference value is decreased if the second pitch condition is fulfilled and the counted time is above a seventh threshold value.

In this embodiment, the power controller speed reference value is only decreased if it is determined that it has not been increased for a certain amount of time (seventh threshold value), i.e. that a certain amount of time has passed since the last time the power controller speed reference value was increased. Thereby, it can be prevented that the power controller speed reference value is successively increased and decreased, which may lead to power fluctuations or instability.

The counting of the time since the last increase of the power controller speed reference value may e.g. be done by counting the number of times (or cycles) that the first pitch condition has not been fulfilled.

According to a further embodiment of the invention, the method further comprises counting the time since the pitch controller speed reference value was last decreased, and the pitch controller speed reference value is increased if the second power condition is fulfilled and the counted time is above an eighth threshold value.

In this embodiment, the pitch controller speed reference value is only increased if it is determined that it has not been decreased for a certain amount of time (eighth threshold value), i.e. that a certain amount of time has passed since the last time the pitch controller speed reference value was decreased. Thereby, it can be prevented that the pitch controller speed reference value is successively decreased and increased, which may lead to pitch fluctuations or instability.

The counting of the time since the last decrease of the pitch controller speed reference value may e.g. be done by counting the number of times (or cycles) that the first power condition has not been fulfilled.

According to a further embodiment of the invention, the power controller speed reference value is not increased beyond an upper power controller speed reference limit, the power controller speed reference value is not decreased below a lower power controller speed reference limit, the pitch controller speed reference value is not increased beyond an upper pitch controller speed reference limit, and the pitch controller speed reference value is not decreased below a lower pitch controller speed reference limit.

By limiting the power controller speed reference value and the pitch controller speed reference value by respective upper and lower limits, it can be assured that said values are maintained within a certain maximum distance from the nominal speed value of the wind turbine.

More specifically, the power controller speed reference value may be limited to an interval extending from Vn-L1 to Vn, where Vn is the nominal speed of the generator, e.g. 1450 rpm, and L1 is a positive value, e.g. 35, 50 or 70 rpm. Similarly, the pitch controller speed reference value may be limited to an interval extending from Vn to Vn+L2, where L2 is a positive value, e.g. 35, 50 or 70 rpm.

According to a further embodiment of the invention, the first incremental value is larger than the first decremental value, and/or the second decremental value is larger than the second incremental value.

As described above, the power controller speed reference value is increased by the first incremental value in a case where a transition from full load to partial load is expected to be approaching or is already in progress, whereas the power controller speed reference value is decreased by the first decremental value in a case where a transition from partial load to full load is considered to have taken place. Accordingly, it is advantageous that the first incremental value is not too small in order to adapt to the coming or ongoing transition, whereas the first decremental value does not need to be particularly large in order to provide the desired stability after a transition has taken place. Similarly, the pitch controller speed reference value is decreased by the second decremental value in a case where a transition from partial load to full load is expected to be approaching or is already in progress, whereas the pitch controller speed reference value is increased by the second incremental value in a case where a transition from full load to partial load is considered to have taken place. Accordingly, it is advantageous that the second decremental value is not too small in order to adapt to the coming or ongoing transition, whereas the second incremental value does not need to be particularly large in order to provide the desired stability after a transition has taken place.

According to a second aspect of the invention there is provided a device for controlling operation of a power controller and a pitch controller in a wind turbine, the device being defined in claim 10.

This aspect of the invention is based on the same general idea as the first aspect described above, i.e. idea that by continuously adjusting (increasing or decreasing) the power controller speed reference value in dependency on respective pitch conditions and adjusting the pitch controller speed reference value in dependency on respective power conditions, both the power controller and the pitch controller can be active simultaneously, without undesired interference between those controllers, and switching between them can thereby be avoided. In other words, the reference value for the power controller is manipulated in dependency on the first and second pitch conditions and the reference value for the pitch controller is manipulated in dependency on the first and second power conditions in such a way that the influence of the respective controllers is controlled.

In the present context, the term "unit" may particularly denote a functional unit in the device. Thus the respective units need not be physically separate units but may rather denote individual functional units performed by a central processing unit of the device.

According to a third aspect of the invention there is provided a control system for a wind turbine, comprising (a) a power controller, (b) a pitch controller, and (c) a device according to the preceding aspect or any of the embodiments described above, the device being adapted to control the power controller and the pitch controller.

In the present context, the term "power controller" may in particular denote a speed-power controller as referred to in the introduction above. That is, the power controller may in particular be a controller which outputs a power reference value (i.e. the power or torque value which is to be applied by the wind turbine) in response to a power controller speed reference value.

In the present context, the term "pitch controller" may in particular denote a speed-pitch controller as referred to in the introduction above. That is, the pitch controller may in particular be a controller which outputs a pitch reference value (i.e. the value of the pitch angle for the blades of the wind turbine) in response to a pitch controller speed reference value.

In particular, the device is adapted to control the power controller by feeding the power controller speed reference value to a corresponding input of the power controller and to control the pitch controller by feeding the pitch controller speed reference value to a corresponding input of the pitch controller.

Thereby, this aspect provides a system in which no switching between the power controller and the pitch controller is necessary during transitions from partial load to full load or from full load to partial load.

According to a fourth aspect of the invention there is provided a wind turbine comprising a control system according to the preceding aspect or any of the above embodiments.

The wind turbine according to this aspect benefits from the above described advantages. In particular, the wind turbine benefits from the fact that sudden load changes can be prevented by the smooth transitions provided by the present invention.

According to a fifth aspect of the invention there is provided a computer program comprising executable program code which when executed by a computer causes the computer to perform the steps of the method according to the first aspect or any of the above embodiments.

According to a sixth aspect of the invention there is provided a computer program product comprising a computer readable data carrier loaded with the computer program according to the preceding aspect.

It is noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular to combinations of features of the method type claims and features of the apparatus type claims, is part of the disclosure of this document.

The aspects defined above and further aspects of the present invention are apparent from the examples of embodiments to be described hereinafter and are explained with reference to the examples of embodiments. The invention will be described in more detail hereinafter with reference to examples of embodiments. However, it is explicitly noted that the invention is not limited to the described exemplary embodiments.

### Brief Description of the Drawing

Figure 1 shows an illustration of different control regions for an exemplary wind turbine.
Figure 2 shows a block diagram of a control system according to an embodiment of the present invention.
Figure 3 shows a power vs. rotational speed operating trajectory of a control system according to the present invention.
Figure 4 shows a power vs. rotational speed operating trajectory of a control system according to the present invention during operation at partial load.
Figure 5 shows a power vs. rotational speed operating trajectory of a control system according to the present invention during operation at full load.
Figure 6 shows graphs illustrating an exemplary time series of corresponding wind speed, power, pitch angle, and controller reference values in accordance with an embodiment of the present invention.

### Detailed Description

The illustration in the drawing is schematic. It is noted that in different figures, similar or identical elements are provided with the same reference numerals or with reference numerals which differ only within the first digit.

Figure 1 shows an illustration of different control regions for an exemplary wind turbine. In particular, as discussed in the introduction, Figure 1 illustrates the behavior of generator speed (upper curve), pitch angle (middle curve), and power (lower curve) as functions of wind speed in the variable speed region A, the constant-speed region B, and the constant-power region C.

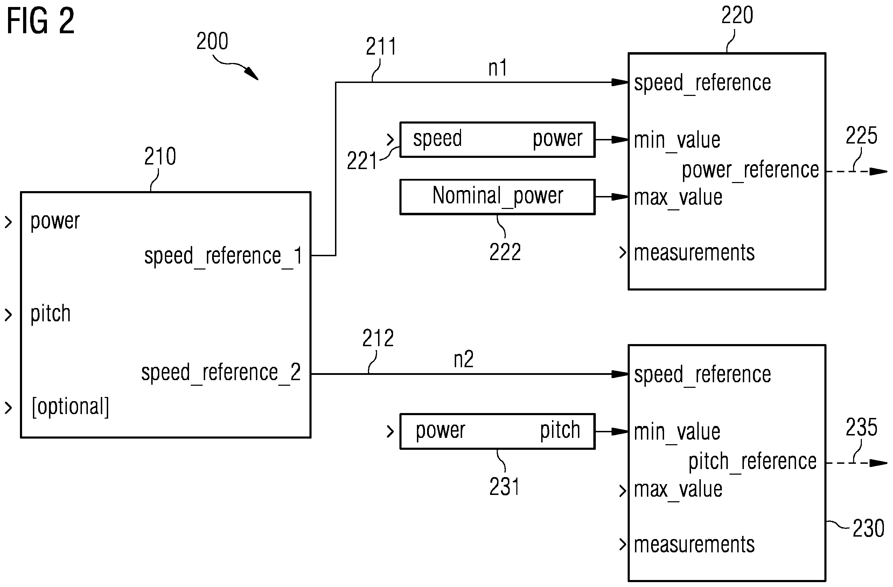

Figure 2 shows a block diagram of a control system 200 according to an embodiment of the present invention. The control system 200 comprises a speed reference handler (control device) 210, a speed-power controller (power controller) 220, and a speed-pitch controller (pitch controller) 230.

The speed reference handler 210 has inputs on its left-hand side (as shown in the drawing) for receiving values that are respectively indicative of a current power value and a current pitch angle value. These values may be received from the corresponding adjustment mechanisms (not shown) of a wind turbine or from the respective outputs 225 and 235 of corresponding controllers 220 and 230 (explained further below). The speed reference handler 210 further comprises an input for receiving further (optional) measurement values. On its right-hand side, the speed reference handler 210 has two outputs respectively labeled "speed_reference_1" and "speed_reference_2". The upper output "speed_reference_1" outputs a power controller speed reference value 211 (also labeled n1) to a corresponding input of the speed-power controller 220, while the lower output "speed_reference_2" outputs a pitch controller speed reference value 211 (also labeled n2) to a corresponding input of the speed-pitch controller 230.

The speed-power controller 220 is designed to calculate and output a power reference value 225 to a power adjustment mechanism (not shown) of the wind turbine in response to the input values received at its left-hand inputs. These inputs include the speed reference value n1 from the speed reference handler 210 (at the upper input), which is a set point value for the speed-power controller 220. In other words, the speed-power controller 220 uses n1 to determine if the rotational speed is too high or too low. The controller 220 works based on an error, which is defined as the difference between the actual (measured) speed and the speed reference n1. The inputs further include a minimum power value (second input from the top), a maximum power value (third input from the top), and, optionally, additional measurement values (lower input). In the present embodiment, the minimum power value is found based on the actual speed of the generator by means of an optimal speed-power look-up-table (LUT). The maximum power value is set to the nominal power value of the wind turbine.

Similarly, the speed-pitch controller 230 is designed to calculate and output a pitch reference value 235 to a pitch adjustment mechanism (not shown) of the wind turbine in response to the input values received at its left-hand inputs. These inputs include the speed reference value n2 from the speed reference handler 210 (at the upper input), which is a set point value for the speed-pitch controller, and a minimum pitch value (second input from the top). In other words, the speed-pitch controller 230 uses n2 to determine if the rotational speed is too high or too low. The controller 230 works based on an error, which is defined as the difference between the actual (measured) speed and the speed reference n2. Like the speed-power controller 220, the speed-pitch controller 230 also include inputs for a maximum pitch value (third input from the top), and additional measurement values (lower input). However, in the present embodiment, these two lower inputs are not used by the speed-pitch controller 230. The minimum pitch value is found based on the actual power by means of an optimal pitch angle look-up-table (LUT).

The function of the speed reference handler 210 is to individually manipulate the respective speed references n1 and n2 to the speed-power controller 220 and the speed-pitch controller 230 such that discrete switching between the two controllers 220 and 230 is avoided. Instead, both controllers 220 and 230 are active at all times such that temporary freezing of the output from the controllers during inactivity due to discrete switching is avoided.

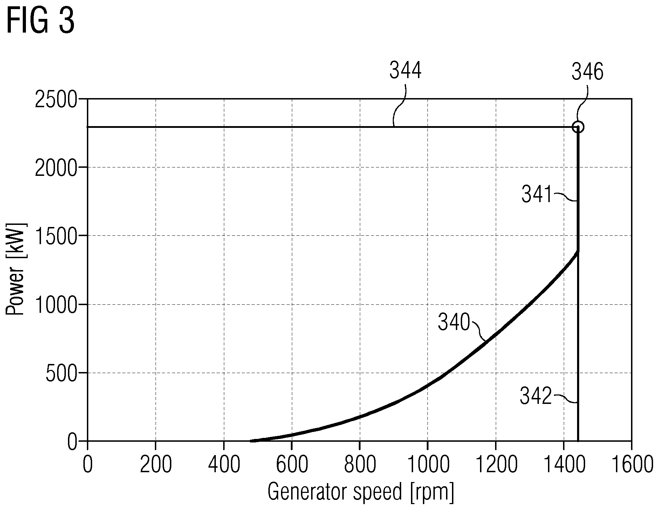

The function of the speed reference handler 210 is further explained in the following with reference to Figures 3 to 5.

Figure 3 shows a nominal operating trajectory 340 of the control system 200. The speed-power controller 220 should keep the speed in the vertical part 341 (constant-speed region) and the speed-pitch controller 230 should keep the speed in the "circle" 346 (constant-power region), which covers all wind speeds above the rated wind speed. The horizontal line 344 represents the nominal (maximum) power and the vertical line 342 represents the nominal speed.

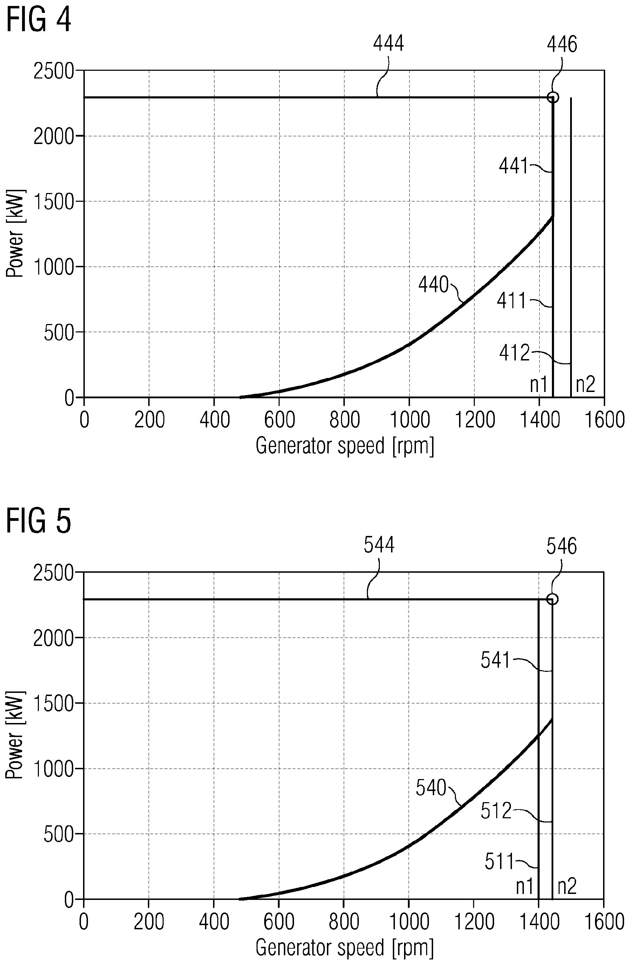

Figure 4 shows an operating trajectory 440 as well as the speed references n1 and n2 of the control system 200 during operation in the partial load region (steady state), i.e. below rated wind speed. In this control region, the target is to use only the speed-power controller 220 without interference from the speed-pitch controller 230 as this will reduce the power output. As shown, the speed reference n1, 411 to the speed-power controller 220 is equal to the nominal speed while the speed reference n2, 412 to the speed-pitch controller 230 is higher than the nominal speed. The speed-power controller 220 is able to control the speed because the power is lower than nominal power for below rated wind speed and this allows control of the speed by adjusting the counter torque/power. At the same time, the speed-pitch controller 230 will see a measured speed which is smaller than its reference n2 and will pitch as low as it is allowed to do. As mentioned above, the speed-pitch controller 230 receives the minimum allowed pitch value, i.e. the optimal pitch angle at the given power value, at its second input from the top.

Figure 5 shows an operating trajectory 540 as well as the speed references n1 and n2 of the control system 200 during operation in the full load region (for steady state), i.e. above rated wind speed. In this control region, the target is to use only the speed-pitch controller 230 without interference from the speed-power controller 220 as this will reduce the power output. As shown, the speed reference n2, 512 to the speed-pitch controller 230 is equal to the nominal speed while the speed reference n1, 511 to the speed-power controller 220 is lower than the nominal speed. The speed-pitch controller 230 is able to control the speed because the pitch angle is higher than the optimal pitch angle for above rated wind speed and this will allow control of the speed by adjusting the angle of attack. At the same time, the speed-power controller 220 will see a measured speed which is higher than its reference n1 and will accordingly apply as much power as it is allowed to do. As mentioned above, the speed-pitch controller 220 receives the maximum allowed power value, i.e. the nominal power value of the generator, at its third input from the top.

In the transition region, i.e. between the states shown in Figures 4 and 5, the most satisfactory approach is to run both control loops together. For example, if the wind is just below rated but rising rapidly, it is useful to start pitching the blades a little before the nominal power is reached (i.e. before the torque demand / power reaches rated/nominal). If the pitch does not start moving until the power reaches rated, it then has to move some way before it starts to control the acceleration, and a small overspeed may result. So, most of the time (when not in the transition region) only one of the controllers 220 and 230 is effectively active, but in the transition region they can be made to interfere constructively when close to the rated point.

More specifically, the above is achieved by operating the speed reference handler 210 to manipulate (increase and decrease) the reference speeds n1 and n2 in accordance with the following pseudo code:

```
 //***** Compute speed reference n1 for power controller *****
 
 // For full load to partial load transition: The main idea is
 to foresee when the transition will take place (when the
 pitch angle is approaching the optimal pitch angle or is very
 close to the optimal pitch angle) and prepare the controller
 to the transition in advance. This is done by increasing the
 speed reference n1 to the speed-power controller, preparing
 it to track the nominal speed.
 // For partial load to full load transition: If the pitch
 (speed-pitch controller output) is significantly above the
 optimal pitch angle, this is a good indication that the turbine
 is no longer operating in the transition region, but in
 the full load region. Therefore, the speed reference n1 to
 the speed-power controller can be decreased.
 if((TimeToOptimumPitch < Limit1) OR (PitchDelta < Limit2)) {n1 = increase(n1);
 } else if((PitchDelta > Limit3) AND (TimesSpeedPowerControllerSpeedReferenceHasNotIncreased
 >= Limit4)){n1 = decrease(n1)
 }
```

where:
- TimeToOptimumPitch is the estimated time for the pitch to reach the optimal pitch angle. This can be computed based on the recent or filtered slope of the pitch angle and the distance from the current pitch angle to the optimal pitch angle.
- PitchDelta is the difference between the current pitch angle and the optimal pitch angle.
- TimesSpeedPowerControllerSpeedReferenceHasNotIncreased is the number of times, where n1 has not been increased. This term is not absolutely necessary, but is included to make sure that the speed reference to the speed-power controller is stable before it is being ramped down again.
- Limitx are appropriately selected threshold values.

```
 //***** Compute speed reference n2 for pitch controller *****
 // For partial load to full load transition: The main idea is
 to foresee when the transition will take place (when the
 power is approaching nominal power or is very close to nominal
 power) and prepare the controller to the transition in
 advance. This is done by decreasing the speed reference n2
 for the speed-pitch controller, preparing it to track the
 nominal speed.
 // For full load to partial load transition: If the power
 (speed-power controller output) is significantly below the
 nominal power, this is a good indication that the turbine is
 no longer operating in the transition region, but in the partial
 load region. Therefore, the speed reference n2 to the
 speed-pitch controller can be increased.
 If ((TimeToMaxPower < Limit5) OR (Power > (MaxPower-Limit6)) {n2 = decrease(n2);
 } else if ((Power < (MaxPower-Limit7)) AND (TimesSpeedPitch-
 ControllerSpeedReferenceHasNotDecreased >= Limit8)) {n2 = increase(n2);
 }
```

where:- TimeToMaxPower is the estimated time for the power to reach the nominal power. This can be computed based on the recent or filtered slope of the power and the distance from the current power value to the nominal power.
- Power is the current power.
- MaxPower is the nominal power.
- TimesSpeedPitchControllerSpeedReferenceHasNotDecreased is the number of times, where n2 has not been decreased. This term is not absolutely necessary, but is included to make sure that the speed reference n2 to the speed-pitch controller is stable before it is being ramped up again.
- Limitx are appropriately selected threshold values.

```
 //**** Saturate speed references offsets *****
 n1 = saturate(n1, MaxSpeed - Limit, MaxSpeed);
 n2 = saturate(n2, MaxSpeed, MaxSpeed + Limit);
```

where
- MaxSpeed is the nominal speed of the generator
- Limit is a positive speed offset

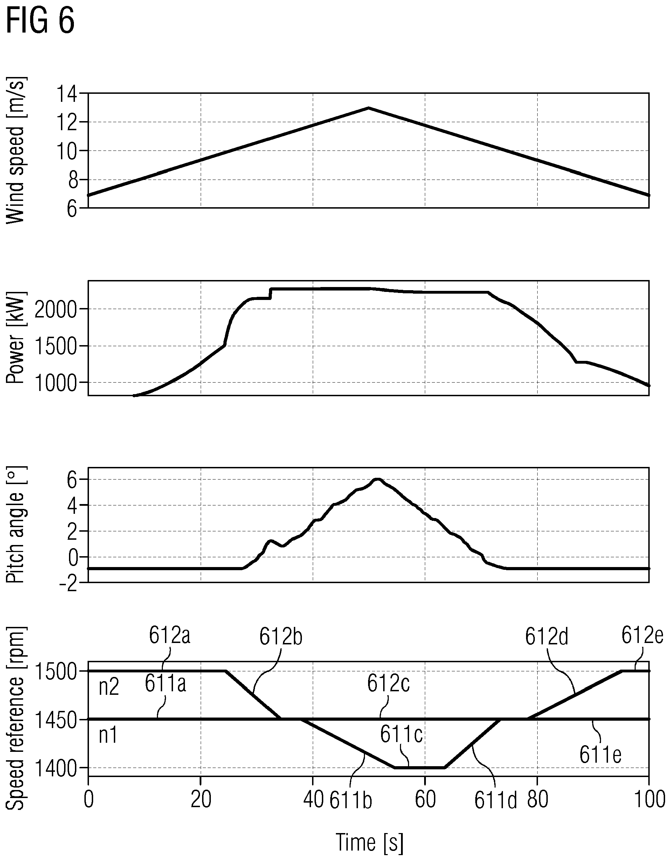

Figure 6 shows graphs illustrating an exemplary time series of corresponding wind speed, power, pitch angle, and controller reference values n1 and n2 as calculated by the speed reference handler 210 shown in Figure 2. More specifically, Figure 6 shows the behavior in case of a wind speed as illustrated in the uppermost graph.

In the beginning, i.e. at low wind speed, n1 = MaxSpeed as indicated by the curve section 611a and n2 = MaxSpeed + Limit as indicated by the curve section 612a. In the present embodiment, MaxSpeed = 1450 rpm and Limit = 50 rpm. This state corresponds to the state shown in Figure 4 and discussed above. Then, once the wind speed increases to a certain level, n2 starts decreasing as indicated by the curve section 612b while n1 is maintained. After n2 has reached the lower limit, i.e. n2 = MaxSpeed as indicated by the curve section 612c, n1 starts decreasing as indicated by the curve section 611b until it reaches its lower limit, i.e. n1 = MaxSpeed - Limit as indicated by the curve section 611c. This state corresponds to the state shown in Figure 5 and discussed above. Now the wind speed reaches its maximum value and begins decreasing again. Once the wind speed has decreased a certain amount, n1 starts increasing as indicated by the curve section 611d until it again reaches its upper limit, i.e. n1 = MaxSpeed as indicated by the curve section 611e. Shortly after n1 has reached its upper limit, n2 starts increasing as indicated by the curve section 612d until it finally reaches its upper limit, i.e. n2 = MaxSpeed + Limit as indicated by the curve section 612e. The system has now returned to the state shown in Figure 4.

As can be seen from Figure 6, the control strategy applied by the speed reference handler 210 allows the speed-pitch controller 230 to become active in due time for the partial load to full load transition. The speed-power controller 220 is to become active in due time for the full load to partial load transition. When the system is no longer in the transition region, only one controller is effectively controlling the speed, because the speed reference to the other controller is offset from the operating speed. This avoids that one controller interferes with the other.

Recapitulating the above teachings, the present invention provides an advantageous way of handling the transition between partial load and full load control: individual speed references are set to the two controllers to ensure nice operation in the transition region with constructive interference between the two controllers.

Furthermore, the present invention obviates the need for the difficult discipline of (and potential risks associated with) switching discretely between the two controllers.

Finally, the present invention provides the advantage of making the control response timelier, because reaching the transition point is foreseen by time estimates (TimeToOptimumPitch and TimeToMaxPower). Thereby, the system will not have to pitch quite so aggressively to control speed in the transition zone. This will be much better for tower and blade loads because rapid pitch changes cause large changes in thrust.

It is noted that the term "comprising" does not exclude other elements or steps and the use of the articles "a" or "an" does not exclude a plurality. Also elements described in association with different embodiments may be combined. It is further noted that reference signs in the claims are not to be construed as limiting the scope of the claims.

## Claims

1. A method of controlling operation of a power controller (220) and a pitch controller (230) in a wind turbine, the method comprising repetitively performing the following steps:
obtaining a pitch value,
determining whether a first pitch condition is fulfilled, and if so, increase a current power controller speed reference value (n1, 211) by a first incremental value by adding the first incremental value to the current power controller speed reference value, only if the first pitch condition is not fulfilled, determining whether a second pitch condition is fulfilled, and if so, decrease the current power controller speed reference value (n1, 211) by a first decremental value by subtracting the first decremental value from the current power controller speed reference value,
obtaining a power value,
determining whether a first power condition is fulfilled, and if so, decrease a current pitch controller speed reference value (n2, 212) by a second decremental value by subtracting the second decremental value from the current pitch controller speed reference value, and only if the first power condition is not fulfilled, determining whether a second power condition is fulfilled, and if so, increase the current pitch controller speed reference value (n2, 212) by a second incremental value by adding the second incremental value to the current pitch controller speed reference value.

2. The method according to the preceding claim, wherein the first pitch condition is fulfilled when the difference between the pitch value and a predetermined pitch value is below a first threshold value, and wherein the second pitch condition is fulfilled when the difference between the pitch value and the predetermined pitch value is above a second threshold value.

3. The method according to any preceding claim, wherein the step of determining whether a first pitch condition is fulfilled comprises calculating a pitch time estimate, the pitch time estimate being indicative of the time remaining until the pitch reaches the predetermined pitch value, and wherein the first pitch condition is fulfilled when the pitch time estimate is below a third threshold value.

4. The method according to any preceding claim, wherein the first power condition is fulfilled when the power value is above a fourth threshold value, and wherein the second power condition is fulfilled when the power value is below a fifth threshold value.

5. The method according to any preceding claim, wherein the step of determining whether a first power condition is fulfilled comprises calculating a power time estimate, the power time estimate being indicative of the time remaining until the power reaches a predetermined power value, and wherein the first power condition is fulfilled when the power time estimate is below a sixth threshold value.

6. The method according to any preceding claim, further comprising counting the time since the power controller speed reference value (211, n1) was last increased, and wherein the power controller speed reference value (211, n1) is decreased if the second pitch condition is fulfilled and the counted time is above a seventh threshold value.

7. The method according to any preceding claim, further comprising counting the time since the pitch controller speed reference value (212, n2) was last decreased, and wherein the pitch controller speed reference value (212, n2) is increased if the second power condition is fulfilled and the counted time is above an eighth threshold value.

8. The method according to any preceding claim, wherein the power controller speed reference value (211, n1) is not increased beyond an upper power controller speed reference limit, the power controller speed reference value (211, n1) is not decreased below a lower power controller speed reference limit, the pitch controller speed reference value (212, n2) is not increased beyond an upper pitch controller speed reference limit, and the pitch controller speed reference value (212, n2) is not decreased below a lower pitch controller speed reference limit.

9. The method according to any preceding claim, wherein the first incremental value is larger than the first decremental value, and/or the second decremental value is larger than the second incremental value.

10. A device (210) for controlling operation of a power controller (220) and a pitch controller (230) in a wind turbine, the device (210) comprising
a unit configured to obtain a pitch value,
a unit configured to determine whether a first pitch condition is fulfilled, and if so, to increase a current power controller speed reference value (211, n1) by a first incremental value by adding the first incremental value to the current power controller speed reference value,
a unit configured to determine whether a second pitch condition is fulfilled only in case the first pitch condition is not fulfilled, and if so, to decrease the current power controller speed reference value (211, n1) by a first decremental value by subtracting the first decremental value from the current power controller speed reference value,
a unit configured to obtain a power value,
a unit configured to determine whether a first power condition is fulfilled, and if so, to decrease a current pitch controller speed reference value (212, n2) by a second decremental value by subtracting the second decremental value from the current pitch controller speed reference value, and
a unit configured to determine whether a second power condition is fulfilled only in case the first power condition is not fulfilled, and if so, to increase the current pitch controller speed reference value (212, n2) by a second incremental value by adding the second incremental value to the current pitch controller speed reference value.

11. A control system (200) for a wind turbine, comprising
a power controller (220),
a pitch controller (230), and
a device (210) according to the preceding claim, the device being adapted to control the power controller (220) and the pitch controller (230).

12. A wind turbine comprising a control system (200) according to the preceding claim.

13. A computer program comprising executable program code which when executed by a computer causes the computer to perform the steps of the method according to any of claims 1 to 9.

14. A computer program product comprising a computer readable data carrier loaded with the computer program according to the preceding claim.

## Patentansprüche

1. Verfahren zum Regeln des Betriebs eines Leistungsreglers (220) und eines Pitch-Reglers (230) bei einer Windenergieanlage, das das wiederholte Durchführen folgender Schritte umfasst:
Gewinnen eines Pitch-Werts,
Ermitteln, ob eine erste Pitch-Bedingung erfüllt ist, und, wenn dies der Fall ist, Erhöhen eines aktuellen Leistungsregler-Drehzahlreferenzwerts (n1, 211) um einen ersten Inkrementalwert durch Addieren des ersten Inkrementalwerts zu dem aktuellen Leistungsregler-Drehzahlreferenzwert,
nur wenn die erste Pitch-Bedingung nicht erfüllt ist, Ermitteln, ob eine zweite Pitch-Bedingung erfüllt ist, und, wenn dies der Fall ist, Verringern des aktuellen Leistungsregler-Drehzahlreferenzwerts (n1, 211) um einen ersten Dekrementalwert durch Subtrahieren des ersten Dekrementalwerts von dem aktuellen Leistungsregler-Drehzahlreferenzwert,
Gewinnen eines Leistungswerts,
Ermitteln, ob eine erste Leistungsbedingung erfüllt ist, und, wenn dies der Fall ist, Verringern eines aktuellen Pitch-Regler-Drehzahlreferenzwerts (n2, 212) um einen zweiten Dekrementalwert durch Subtrahieren des zweiten Dekrementalwerts von dem aktuellen Pitch-Regler-Drehzahlreferenzwert, und
nur wenn die erste Leistungsbedingung nicht erfüllt ist, Ermitteln, ob eine zweite Leistungsbedingung erfüllt ist, und, wenn dies der Fall ist, Erhöhen des aktuellen Pitch-Regler-Drehzahlreferenzwerts (n2, 212) um einen zweiten Inkrementalwert durch Addieren des zweiten Inkrementalwerts zu dem aktuellen Pitch-Regler-Drehzahlreferenzwert.

2. Verfahren nach dem vorhergehenden Anspruch, bei dem die erste Pitch-Bedingung erfüllt ist, wenn die Differenz zwischen dem Pitch-Wert und einem vorgegebenen Pitch-Wert unter einem ersten Schwellwert liegt, und die zweite Pitch-Bedingung erfüllt ist, wenn die Differenz zwischen dem Pitch-Wert und einem vorgegebenen Pitch-Wert über einem zweiten Schwellwert liegt.

3. Verfahren nach einem der vorhergehenden Ansprüche, bei dem das Ermitteln, ob eine erste Pitch-Bedingung erfüllt ist, das Berechnen eines Pitch-Zeitschätzwerts umfasst, der die verbleibende Zeit angibt, bis der Anstellwinkel den vorgegebenen Pitch-Wert erreicht, und bei dem die erste Pitch-Bedingung erfüllt ist, wenn der Pitch-Zeitschätzwert unter einem dritten Schwellwert liegt.

4. Verfahren nach einem der vorhergehenden Ansprüche, bei dem die erste Leistungsbedingung erfüllt ist, wenn der Leistungswert über einem vierten Schwellwert liegt, und die zweite Leistungsbedingung erfüllt ist, wenn der Leistungswert unter einem fünften Schwellwert liegt.

5. Verfahren nach einem der vorhergehenden Ansprüche, bei dem das Ermitteln, ob eine erste Leistungsbedingung erfüllt ist, das Berechnen eines Leistungszeitschätzwerts umfasst, der die verbleibende Zeit angibt, bis die Leistung einen vorgegebenen Leistungswert erreicht, und bei dem die erste Leistungsbedingung erfüllt ist, wenn der Leistungszeitschätzwert unter einem sechsten Schwellwert liegt.

6. Verfahren nach einem der vorhergehenden Ansprüche, das ferner das Messen der seit dem letzten Erhöhen des Leistungsregler-Drehzahlreferenzwerts (211, n1) verstrichenen Zeit umfasst und bei dem der Leistungsregler-Drehzahlreferenzwert (211, n1) verringert wird, wenn die zweite Pitch-Bedingung erfüllt ist und die gemessene Zeit über einem siebenten Schwellwert liegt.

7. Verfahren nach einem der vorhergehenden Ansprüche, das ferner das Messen der seit dem letzten Verringern des Pitch-Regler-Drehzahlreferenzwerts (212, n2) verstrichenen Zeit umfasst und bei dem der Pitch-Regler-Drehzahlreferenzwert (212, n2) erhöht wird, wenn die zweite Leistungsbedingung erfüllt ist und die gemessene Zeit über einem achten Schwellwert liegt.

8. Verfahren nach einem der vorhergehenden Ansprüche, bei dem der Leistungsregler-Drehzahlreferenzwert (211, n1) nicht über einen oberen Grenzwert des Leistungsregler-Drehzahlreferenzwerts erhöht, der Leistungsregler-Drehzahlreferenzwert (211, n1) nicht unter einen unteren Grenzwert des Leistungsregler-Drehzahlreferenzwerts verringert, der Pitch-Regler-Drehzahlreferenzwert (212, n2) nicht über einen oberen Grenzwert des Pitch-Regler-Drehzahlreferenzwerts erhöht und der Pitch-Regler-Drehzahlreferenzwert (212, n2) nicht unter einen unteren Grenzwert des Pitch-Regler-Drehzahlreferenzwerts verringert wird.

9. Verfahren nach einem der vorhergehenden Ansprüche, bei dem der erste Inkrementalwert größer ist als der erste Dekrementalwert und/oder der zweite Dekrementalwert größer ist als der zweite Inkrementalwert.

10. Vorrichtung (210) zum Regeln des Betriebs eines Leistungsreglers (220) und eines Pitch-Reglers (230) bei einer Windenergieanlage, wobei die Vorrichtung (210) Folgendes umfasst:
eine Einheit, die so konfiguriert ist, dass sie einen Pitch-Wert gewinnt,
eine Einheit, die so konfiguriert ist, dass sie ermittelt, ob eine erste Pitch-Bedingung erfüllt ist, und, wenn dies der Fall ist, einen aktuellen Leistungsregler-Drehzahlreferenzwert (211, n1) um einen ersten Inkrementalwert erhöht, indem sie den ersten Inkrementalwert zu dem aktuellen Leistungsregler-Drehzahlreferenzwert addiert,
eine Einheit, die so konfiguriert ist, dass sie nur, wenn die erste Pitch-Bedingung nicht erfüllt ist, ermittelt, ob eine zweite Pitch-Bedingung erfüllt ist, und, wenn dies der Fall ist, den aktuellen Leistungsregler-Drehzahlreferenzwert (211, n1) um einen ersten Dekrementalwert verringert, indem sie den ersten Dekrementalwert von dem aktuellen Leistungsregler-Drehzahlreferenzwert subtrahiert,
eine Einheit, die so konfiguriert ist, dass sie einen Leistungswert gewinnt,
eine Einheit, die so konfiguriert ist, dass sie ermittelt, ob eine erste Leistungsbedingung erfüllt ist, und, wenn dies der Fall ist, einen aktuellen Pitch-Regler-Drehzahlreferenzwert (212, n2) um einen zweiten Dekrementalwert verringert, indem sie den zweiten Dekrementalwert von dem aktuellen Pitch-Regler-Drehzahlreferenzwert subtrahiert, und
eine Einheit, die so konfiguriert ist, dass sie nur, wenn die erste Leistungsbedingung nicht erfüllt ist, ermittelt, ob eine zweite Leistungsbedingung erfüllt ist, und, wenn dies der Fall ist, den aktuellen Pitch-Regler-Drehzahlreferenzwert (212, n2) um einen zweiten Inkrementalwert erhöht, indem sie den zweiten Inkrementalwert zu dem aktuellen Pitch-Regler-Drehzahlreferenzwert addiert.

11. Regelsystem (200) für eine Windenergieanlage, das Folgendes umfasst:
einen Leistungsregler (220),
einen Pitch-Regler (230) und
eine Vorrichtung (210) nach dem vorhergehenden Anspruch, die so ausgelegt ist, dass sie den Leistungsregler (220) und den Pitch-Regler (230) regelt.

12. Windenergieanlage mit einem Regelsystem (200) nach dem vorhergehenden Anspruch.

13. Computerprogramm mit ausführbarem Programmcode, der bei Ausführen durch einen Computer den Computer dazu veranlasst, die Schritte des Verfahrens nach einem der Ansprüche 1 bis 9 durchzuführen.

14. Computerprogrammprodukt mit einem computerlesbaren Datenträger, auf den das Computerprogramm nach dem vorhergehenden Anspruch geladen ist.

## Revendications

1. Un procédé de commande du fonctionnement d'un dispositif de commande de puissance (220) et d'un dispositif de commande de pas (230) dans une turbine éolienne, le procédé comprenant l'exécution répétée des étapes suivantes :
l'obtention d'une valeur de pas,
la détermination si une première condition de pas est satisfaite, et si c'est le cas, l'augmentation d'une valeur de référence de vitesse actuelle du dispositif de commande de puissance (n1, 211) d'une première valeur incrémentielle par l'ajout de la première valeur incrémentielle à la valeur de référence de vitesse actuelle du dispositif de commande de puissance, uniquement si la première condition de pas n'est pas satisfaite,
la détermination si une deuxième condition de pas est satisfaite, et si c'est le cas, la diminution de la valeur de référence de vitesse actuelle du dispositif de commande de puissance (n1, 211) d'une première valeur décrémentielle par la soustraction de la première valeur décrémentielle de la valeur de référence de vitesse actuelle du dispositif de commande de puissance,
l'obtention d'une valeur de puissance,
la détermination si une première condition de puissance est satisfaite, et si c'est le cas, la diminution d'une valeur de référence de vitesse actuelle du dispositif de commande de pas (n2, 212) d'une deuxième valeur décrémentielle par la soustraction de la deuxième valeur décrémentielle de la valeur de référence de vitesse actuelle du dispositif de commande de pas, uniquement si la première condition de puissance n'est pas satisfaite,
la détermination si une deuxième condition de puissance est satisfaite, et si c'est le cas, l'augmentation de la valeur de référence de vitesse actuelle du dispositif de commande de pas (n2, 212) d'une deuxième valeur incrémentielle par l'ajout de la deuxième valeur incrémentielle à la valeur de référence de vitesse actuelle du dispositif de commande de pas.

2. Le procédé selon la revendication précédente, dans lequel la première condition de pas est satisfaite lorsque la différence entre la valeur de pas et une valeur de pas prédéterminée se situe sous une première valeur seuil, et dans lequel la deuxième condition de pas est satisfaite lorsque la différence entre la valeur de pas et la valeur de pas prédéterminée se situe au-dessus d'une deuxième valeur seuil.

3. Le procédé selon l'une quelconque des revendications précédentes, dans lequel l'étape de détermination si une première condition de pas est satisfaite comprend le calcul d'une estimation de durée de pas, l'estimation de durée de pas étant indicative de la durée restante jusqu'à ce que le pas atteigne la valeur de pas prédéterminée, et dans lequel la première condition de pas est satisfaite lorsque l'estimation de durée de pas se situe sous une troisième valeur seuil.

4. Le procédé selon l'une quelconque des revendications précédentes, dans lequel la première condition de puissance est satisfaite lorsque la valeur de puissance se situe au-dessus d'une quatrième valeur seuil, et dans lequel la deuxième condition de puissance est satisfaite lorsque la valeur de puissance se situe sous une cinquième valeur seuil.

5. Le procédé selon l'une quelconque des revendications précédentes, dans lequel l'étape de détermination si une première condition de puissance est satisfaite comprend le calcul d'une estimation de durée de puissance, l'estimation de durée de puissance étant indicative de la durée restante jusqu'à ce que la puissance atteigne une valeur de puissance prédéterminée, et dans lequel la première condition de puissance est satisfaite lorsque l'estimation de durée de puissance se situe sous une sixième valeur seuil.

6. Le procédé selon l'une quelconque des revendications précédentes, comprenant en outre un décompte de la durée depuis le moment où la valeur de référence de vitesse du dispositif de commande de puissance (211, n1) a été augmentée pour la dernière fois, et dans lequel la valeur de référence de vitesse du dispositif de commande de puissance (211, n1) est diminuée si la deuxième condition de pas est satisfaite et la durée décomptée se situe au-dessus d'une septième valeur seuil.

7. Le procédé selon l'une quelconque des revendications précédentes, comprenant en outre un décompte de la durée depuis le moment où la valeur de référence de vitesse du dispositif de commande de pas (212, n2) a été diminuée pour la dernière fois, et dans lequel la valeur de référence de vitesse du dispositif de commande de pas (212, n2) est augmentée si la deuxième condition de puissance est satisfaite et la durée décomptée se situe au-dessus d'une huitième valeur seuil.

8. Le procédé selon l'une quelconque des revendications précédentes, dans lequel la valeur de référence de vitesse du dispositif de commande de puissance (211, n1) n'est pas augmentée au-delà d'une limite de référence de vitesse supérieure du dispositif de commande de puissance, la valeur de référence de vitesse du dispositif de commande de puissance (211, n1) n'est pas diminuée sous une limite de référence de vitesse inférieure de dispositif de commande de puissance, la valeur de référence de vitesse du dispositif de commande de pas (212, n2) n'est pas augmentée au-delà d'une limite de référence de vitesse supérieure du dispositif de commande de pas, et la valeur de référence de vitesse du dispositif de commande de pas (212, n2) n'est pas diminuée sous une limite de référence de vitesse inférieure du dispositif de commande de pas.

9. Le procédé selon l'une quelconque des revendications précédentes, dans lequel la première valeur incrémentielle est supérieure à la première valeur décrémentielle, et/ou la deuxième valeur décrémentielle est supérieure à la deuxième valeur incrémentielle.

10. Un dispositif (210) de commande du fonctionnement d'un dispositif de commande de puissance (220) et d'un dispositif de commande de pas (230) dans une turbine éolienne, le dispositif (210) comprenant
une unité configurée de façon à obtenir une valeur de pas,
une unité configurée de façon à déterminer si une première condition de pas est satisfaite, et si c'est le cas, l'augmentation d'une valeur de référence de vitesse actuelle du dispositif de commande de puissance (211, n1) d'une première valeur incrémentielle par l'ajout de la première valeur incrémentielle à la valeur de référence de vitesse actuelle du dispositif de commande de puissance,
une unité configurée de façon à déterminer si une deuxième condition de pas est satisfaite uniquement dans le cas où la première condition de pas n'est pas satisfaite, et si c'est le cas, la diminution de la valeur de référence de vitesse actuelle du dispositif de commande de puissance (211, n1) d'une première valeur décrémentielle par la soustraction de la première valeur décrémentielle de la valeur de référence de vitesse actuelle du dispositif de commande de puissance,
une unité configurée de façon à obtenir une valeur de puissance,
une unité configurée de façon à déterminer si une première condition de puissance est satisfaite, et si c'est le cas, la diminution d'une valeur de référence de vitesse actuelle du dispositif de commande de pas (212, n2) d'une deuxième valeur décrémentielle par la soustraction de la deuxième valeur décrémentielle de la valeur de référence de vitesse actuelle du dispositif de commande de pas, et
une unité configurée de façon à déterminer si une deuxième condition de puissance est satisfaite uniquement dans le cas où la première condition de puissance n'est pas satisfaite, et si c'est la cas, de façon à augmenter la valeur de référence de vitesse actuelle du dispositif de commande de pas (212, n2) d'une deuxième valeur incrémentielle par l'ajout de la deuxième valeur incrémentielle à la valeur de référence de vitesse actuelle du dispositif de commande de pas.

11. Un système de commande (200) pour une turbine éolienne, comprenant
un dispositif de commande de puissance (220),
un dispositif de commande de pas (230), et
un dispositif (210) selon la revendication précédente, le dispositif étant adapté de façon à commander le dispositif de commande de puissance (220) et le dispositif de commande de pas (230).

12. Une turbine éolienne comprenant un système de commande (200) selon la revendication précédente.

13. Un programme informatique comprenant du code de programme exécutable qui, lorsqu'il est exécuté par un ordinateur, amène l'ordinateur à exécuter les étapes du procédé selon l'une quelconque des revendications 1 à 9.

14. Un produit de programme informatique comprenant un support de données lisible par ordinateur chargé avec le programme informatique selon la revendication précédente.
